# FASCICULE DE BREVET EUROPEEN

(11) **EP 3 313 949 B1**
(45) Date de publication et mention de la délivrance du brevet: **08.03.2023**
(21) Numéro de dépôt: 16747809.8
(22) Date de dépôt: 23.06.2016
(51) Int. Cl.: C09J 7/20, B23K 26/00, B23K 26/38, B23K 26/60

(54) **FILM ADHESIF SENSIBLE A LA PRESSION ET SON UTILISATION POUR LA PROTECTION DE SURFACES**
HAFTKLEBEFOLIE UND VERWENDUNG DAVON ZUM SCHUTZ VON OBERFLÄCHEN
PRESSURE-SENSITIVE ADHESIVE FILM AND THE USE THEREOF FOR PROTECTING SURFACES

(30) Priorité: 24.06.2015 FR 1555812
(43) Date de publication de la demande: 02.05.2018
(73) Titulaire: Novacel, 76250 Deville-les-Rouen (FR)
(72) Inventeur: MASSON, Jean-Loup, 76230 Bois-guillaume (FR); DE FILIPPIS, Farah, 76300 Sotteville-lès-rouen (FR); SCHAPMAN, Fanny, 76113 Sahurs (FR); BENARD, Julien, 76770 Malaunay (FR)
(74) Mandataire: Cabinet Beau de Loménie
(86) Numéro de dépôt international: PCT/FR2016/051534
(87) Numéro de publication internationale: WO 2016/207552

(56) Documents cités:
- EP-A1- 1 076 081
- EP-A1- 1 837 384
- WO-A1-94/28080
- WO-A1-2013/116628
- WO-A1-2014/184499
- WO-A1-2015/118137

## Description

L'invention concerne le domaine de la protection temporaire de surface. Plus particulièrement, l'invention concerne un film adhésif sensible à la pression ayant un bruit au déroulement réduit.

### Etat de la technique

Les films de protection de surface sensibles à la pression sont maintenant largement répandus. Ces films sont notamment utilisés pour protéger des surfaces laquées ou non, métalliques ou non, comme par exemple des carrosseries automobiles, ou encore des surfaces plastiques en plaques (PMMA, PVC, PC, PETg, etc...) ou profilées, des surfaces stratifiées, des surfaces vernies, du verre, revêtu ou non, de la moquette, etc.... Un des impératifs auxquels les films de protection de surface doivent répondre est de laisser le moins de marques, de pollution ou de résidus d'adhésif possibles sur les surfaces protégées une fois le film enlevé. Cela nécessite des formulations spécifiques de films, d'adhésifs, d'encres et de vernis, ainsi que des procédés particuliers d'assemblage de ces composants.

Les films de protection de surface sensibles à la pression comprennent généralement une couche support et une couche adhésive formée sur celle-ci. Ils peuvent être préparés par enduction d'un adhésif en phase solvant, en phase aqueuse, par voie sèche (hotmelt ou warmmelt) sur la couche support, ou par co-extrusion de la couche support et de la couche adhésive en une seule opération. A titre d'exemples on peut citer les films décrits dans les documents suivants : EP-A-0 519 278 ; US 5 925 456 ; FR-A-2 969 626 ; DE-A-10 2005 055 913.

Par ailleurs, un film de protection de surface est souvent imprimé afin de permettre au client de véhiculer un message publicitaire ou des informations sur le matériau protégé (sens de pose, conditions de stockage etc.).

Dans le domaine de la protection temporaire de surface, un vernis est généralement utilisé dans le cas des films imprimés. L'encre est déposée sur le film, séchée, puis recouverte de vernis. De la même manière que pour la colle, le film subit un traitement corona au préalable pour permettre à l'encre de se fixer. Le vernis, sert avant tout à masquer le traitement corona qui n'est pas recouvert d'encre. Dans certains cas, le vernis sert aussi à protéger l'impression de l'abrasion, à réduire les forces de déroulement ou encore à diminuer le bruit au déroulement.

La demande de brevet DE 29609679 décrit un film de séparation (de type « liner ») pour protéger les bâtiments de l'humidité, comprenant un support enduit d'une couche adhésive et d'un revêtement silicone à fonction époxy, réticulé par voie cationique, faisant face à la couche adhésive.

La demande de brevet EP-A-1 918 344 décrit un film de protection de surface destiné à protéger des dispositifs optiques comprenant une couche d'adhésif sensible à la pression à base de caoutchouc, et une couche formée d'un polymère greffé silicone acrylique, disposées de part et d'autre d'une couche support.

La demande de brevet FR-A-2 967 365 décrit un film de protection temporaire pour surfaces métalliques qui comprend une couche support revêtue sur l'une de ses faces par une couche adhésive à base de caoutchouc naturel ou synthétique, et revêtue sur l'autre face par une couche dite « anti-adhésive » à base de silicone modifiée acrylique, telle qu'une silicone commercialisée par la société Evonik sous la marque Tego ^{®}, et plus spécialement un mélange entre les produits Tego ^{®} RC 711 et Tego ^{®} RC 902. Or ces silicones comprennent des groupes hydroxyles secondaires qui vont interférer avec les fonctionnalités libres de l'adhésif avec comme conséquence une modification des propriétés techniques du film comme l'augmentation de la force de déroulement au cours du temps. Dans le cas présent, les fonctions hydroxyles secondaires libres du vernis réagiraient avec l'isocyanate (ou autre réticulant) contenu dans l'adhésif (création de liaisons covalentes entre l'adhésif et le vernis) dès la mise en contact du vernis et de l'adhésif lors de l'enroulement des bobines, ce qui conduirait une impossibilité de dérouler les bobines due à une force de déroulement trop élevée (phénomène appelé communément « blocking »). Les films décrits dans la demande FR-A-2 967 365 ne peuvent donc pas, contrairement à ce qui est indiqué, être utilisés pour la protection temporaire de surfaces.

La demande de brevet WO 2014/184499 décrit un film adhésif sensible à la pression qui comprend un support enduit d'une colle sensible à la pression, le support comprenant au moins une couche expansée de polyoléfine et un ou plusieurs additifs.

On connaît par ailleurs de la demande de brevet WO 01/38450 un complexe silicone/adhésif comprenant une couche support revêtu sur l'une de ses faces par une couche adhésive et sur l'autre de ses faces par une couche à base de silicone ; un tel complexe trouve notamment application dans le domaine des papiers protecteurs adhésifs, étiquettes, papiers décoratifs et rubans adhésifs. Dans cette dernière application tout particulièrement, le revêtement à base de silicone et le revêtement adhésif sont mis en contact lors de l'enroulement du support sur lui-même.

On connaît également de la demande de brevet WO 94/28080 des bandes adhésives ayant une structure composite comprenant un premier substrat revêtu d'une première couche comprenant le produit de réaction d'une résine époxypolysiloxane, et un second substrat revêtu d'une couche comprenant une seconde couche d'un adhésif sensible à la pression, le second substrat étant attaché à la surface de la première couche au moyen dudit adhésif. Tous les adhésifs utilisés dans les exemples sont en caoutchouc synthétique ; dans ces exemples la résine époxypolysiloxane n'est pas réticulée après application sur le substrat. On comprend à la lecture du protocole page 14 que les bandes adhésives ont une largeur de l'ordre du pouce (2,54 cm). De telles bandes adhésives ne sont pas adaptées à la protection de surfaces métalliques.

Sur le marché de la protection temporaire des métaux nus, les colles caoutchoucs sont utilisées pour leur fort pouvoir adhésif car les films de protection obtenus à partir de telles colles, une fois appliqués sur la surface, doivent résister à de fortes contraintes comme la découpe laser, et ils ne doivent pas se décoller pendant le procédé. Toutefois, le film doit être dépelliculé au bout de quelques mois après la pause. De tels films de protection comprennent une couche support revêtue sur l'une de ses faces par une colle caoutchouc haute adhésivité, et sur l'autre face par un vernis (couche anti-adhésive), destiné à augmenter les propriétés de « release » du film c'est-à-dire l'aptitude de la couche adhésive à se détacher plus ou moins facilement du film. L'application de ces films de protection sur les surfaces des métaux nus se fait à une vitesse de 10 m/min jusqu'à plus de 200 m/min (150 m/min en général) en continu ou plaque à plaque (procédé dit « stop and go »). Cependant, le déroulement des bobines de films à base de colle caoutchouc haute adhésivité génère un bruit qui augmente avec la vitesse de déroulement des films de protection. Le problème se pose tout particulièrement avec des bobines de film adhésif adapté à la protection de surfaces métalliques, dont la largeur est supérieure ou égale à 1m, et dont la longueur minimale est 250m (pouvant atteindre jusqu'à 2500m). Ce niveau de bruit, mesuré à une distance de 2/3 mètres environ, peut facilement dépasser 110 dB, ce qui impose des mesures de protection particulières. En effet, bien que le seuil de douleur d'un son se situe à 130 dB, des gênes peuvent être occasionnées dès 85 dB. Les inventeurs ont constaté que ce problème se pose tout particulièrement lorsque la colle caoutchouc comprend au moins 5% en masse (par rapport à la masse totale de la colle) d'une ou plusieurs résines tackifiantes, et possède une température de transition vitreuse supérieure à 230°K.

Il est de plus souhaitable, d'un point de vue économique, de pouvoir préparer des films de protection de surface à base de colle caoutchouc haute adhésivité par enduction en ligne. Dans un tel procédé, la couche support est enduite d'un côté par l'encre puis le vernis, lequel doit être photoréticulé, puis de l'autre côté par la colle caoutchouc. Lorsque les films sont enroulés sur des bobines, le vernis et la colle caoutchouc entrent en contact ; en fonction du degré de réticulation du vernis et du degré de séchage de la colle, il peut se produire une réaction entre le vernis et la colle, susceptible de bloquer le déroulement des bobines de film. On notera à cet égard que le procédé de préparation des films de protection décrits dans les demandes de brevet EP-A-1 918 344 et FR-A-2 967 365, n'est pas un procédé d'enduction en ligne.

Il est donc souhaitable de disposer de films de protection temporaire notamment de surfaces métalliques, dont la couche adhésive est à base de colle caoutchouc, et dont le déroulement, à des vitesses de déroulement élevées, s'accompagne d'un niveau d'émission sonore réduit (< 85 dB). Il est également souhaitable de pouvoir améliorer le rendement de fabrication de tels films, notamment par la technique d'enduction en ligne.

### Description de l'invention

Il a maintenant été découvert, et c'est le fondement de l'invention, qu'il est possible de préparer un film adhésif sensible à la pression pour la protection temporaire de surface, dont la couche adhésive est une colle caoutchouc contenant une ou plusieurs résines tackifiantes, étant caractérisée par une température de transition vitreuse (Tg) supérieure à 230°K et qui, une fois enroulé sur une bobine, se déroule avec un niveau sonore inférieur à 85 dB. Il a également été constaté qu'un tel film de protection peut être fabriqué par enduction en ligne.

Ainsi, selon un premier aspect, l'invention concerne un film adhésif sensible à la pression pour la protection temporaire de surfaces, notamment métalliques, qui comprend :
- un support comprenant au moins une couche de polyoléfine,
- une colle caoutchouc enduite sur l'une des faces du support, et
- un vernis à base de silicone modifié époxy enduit sur l'autre face dudit support, en une quantité allant de 0,4 à 2,5 g/cm²,

la colle caoutchouc étant caractérisée par une température de transition vitreuse (Tg), déterminée par Analyse Mécanique Dynamique (système ARES en mode plan-plan, selon un balayage en température de -193°K à 423°K avec une rampe en température de 5°K/min), supérieure à 230°K et étant obtenue par mélange d'environ 5% à 40% en masse (extrait sec) d'une formulation contenant :
   - 30 à 80% en masse, de préférence de 35 à 75% en masse, d'un caoutchouc naturel ou d'un mélange de caoutchouc(s) naturel(s) et de caoutchouc(s) synthétique(s) ;
   - 5 à 60% en masse, de préférence 20 à 60% en masse, de préférence encore 30 à 60% en masse, d'une ou plusieurs résines tackifiantes ;
   - 0 à 40% en masse, de préférence 0 à 20% en masse, d'un agent plastifiant, tel qu'une huile;
   - 0 à 6% en masse, de préférence >0 à 6% en masse, de préférence >0 à 4% en masse, de préférence encore de 0,05% à 4% en masse, d'un réticulant ;
   - 0 à 4% en masse, de préférence 0 à 2% en masse, d'un ou plusieurs agent(s) anti- vieillissement ;
dans un solvant hydrocarboné tel que le toluène, l'essence, l'hexane ou un mélange de ces solvants, étant entendu que la somme des différents constituants de la formulation est égale à 100% en masse ;
ledit vernis comprenant :
   - 100 parties en masse de résine époxy silicone ;
   - 0-150 parties en masse d'un système modulateur d'adhérence ;
   - >0-20 parties en masse d'un photo-amorceur cationique ;
   - 0-20 parties en masse d'un ou plusieurs additifs choisis parmi un agent anti-mousse et des charges améliorant le glissant, la résistance à l'abrasion, et/ou l'accrochage du vernis sur le film support ;
ledit film adhésif sensible à la pression ayant une largeur comprise entre 950 mm et 2700 mm ;
ledit film adhésif sensible à la pression comprenant des motifs imprimés sur le support.

Le support du film adhésif sensible à la pression selon l'invention comprend au moins une couche de polyoléfine, ladite polyoléfine étant choisie parmi un polyéthylène basse densité radicalaire, un polyéthylène linéaire, un polypropylène, un copolymère d'éthylène et de propylène, ou un mélange de ces composés. Par « mélange de ces composés » on entend au sens de la présente invention un mélange de plusieurs polyoléfines du même type, ou d'une ou plusieurs polyoléfine(s) d'un premier type avec une ou plusieurs polyoléfine(s) d'un ou plusieurs autres types.

Avantageusement, le polyéthylène basse densité radicalaire (PEbdr) a une densité, mesurée selon la norme ASTM D1505, comprise dans la gamme allant de 0,910 à 0,930, et un indice de fluidité, mesuré selon la norme ASTM D1238 (190°C/2,16 kg), compris dans la gamme allant de 0,3 à 10 dg/min. Le polyéthylène linéaire (PE linéaire) est un copolymère d'éthylène et d'un monomère oléfinique en C₃-C₈, tel que le propène, le butène, l'hexène, le méthylpentène ou l'octène. Avantageusement, le PE linéaire a une densité, mesurée selon la norme ASTM D1505, comprise dans la gamme allant de 0,858 à 0,961 et un indice de fluidité, mesuré selon la norme ASTM D1238 (190°C/2,16 kg), compris dans la gamme allant de 0,05 à 10 dg/min. Le copolymère d'éthylène et de propylène (EPM) a avantageusement une densité, mesurée selon la norme ASTM D1505, comprise dans la gamme allant de 0,860 à 0,910 et un taux de propylène compris dans la gamme allant de 25 à 60 % en poids.

Le PEbdr, le PE linéaire et l'EPM susmentionnés peuvent être indifféremment de catalyse métallocène ou Ziegler-Natta.

Avantageusement, le polypropylène a une densité, mesurée selon la norme ASTM D1505, comprise dans la gamme allant de 0,860 à 0,920, et un indice de fluidité, mesuré selon la norme ASTM D1238 (230°C/2,16 kg), compris dans la gamme allant de 0,3 à 10 dg/min.

Le support du film adhésif sensible à la pression selon l'invention est du type monocouche ou du type multicouches, de préférence le support est multicouches et comprend avantageusement 3, 5, 7 ou 9 couches.

Selon un mode de réalisation de l'invention, le support est de type monocouche, laquelle est constituée essentiellement de polyoléfine telle que définie ci-dessus. On entend par « constituée essentiellement de » le fait que la couche du support ne comprend pas d'autres constituants susceptibles d'affecter les propriétés mécaniques et adhésives du film de protection. La couche peut néanmoins contenir un ou plusieurs additifs couramment utilisés dans la fabrication de films adhésifs sensibles à la pression, choisis par exemple parmi les agents matants, en particulier les agents antibloc ; les agents glissants ; les colorants ; les stabilisants UV ; les barrières UV ; les antioxydants ; les agents antivieillissement.

Selon un autre mode de réalisation de l'invention, le support est de type multicouches, et comprend de préférence 3, 5, 7 ou 9 couches. Dans ce mode de réalisation, une ou plusieurs couches du support est (sont) constituée(s) essentiellement de polyoléfine (et peu(ven)t chacune comprendre, comme indiqué ci-dessus, un ou plusieurs additifs conventionnels). De manière avantageuse, le nombre de couches du support est un nombre impair, et la couche centrale est constituée essentiellement de polyoléfine. Les autres couches du support qui ne sont pas centrales sont avantageusement constituées essentiellement (1) d'une polyoléfine, (2) d'un caoutchouc synthétique, (3) d'un copolymère d'éthylène et d'acétate de vinyle, ou d'un mélange de ces composés. L'expression « constituée essentiellement de » employée ici a la même signification que précédemment. On entend par « mélange de ces composés » un mélange de plusieurs composés du même type [(1), (2) ou (3)], ou d'une ou plusieurs composé(s) d'un premier type avec une ou plusieurs composé(s) d'un ou plusieurs autres types.

La polyoléfine utilisée pour les couches non centrales est avantageusement choisie parmi un polyéthylène (PE) radicalaire, un polyéthylène (PE) linéaire, un polypropylène (PP) ou un copolymère d'éthylène et de propylène (EPM).

Le PE radicalaire a avantageusement une densité, mesurée selon la norme ASTM D1505, comprise dans la gamme allant de 0,910 à 0,930, et un indice de fluidité, mesuré selon la norme ASTM D1238 (190°C/2,16 kg), compris dans la gamme allant de 0,3 à 10 dg/min. Le PE linéaire est un copolymère d'éthylène et d'un monomère oléfinique en C₃-C₈, tel que le propène, le butène, l'hexène, le méthylpentène ou l'octène. Il peut être haute, moyenne, basse ou très basse densité, c'est-à-dire avec une densité, mesurée selon la norme ASTM D1505, comprise dans la gamme allant de 0,858 à 0,961, et un indice de fluidité, mesuré selon la norme ASTM D1238 (190°C/2,16 kg), compris dans la gamme allant de 0,05 à 10 dg/min. Tous les polyéthylènes susmentionnés peuvent être indifféremment de catalyse métallocène ou Ziegler-Natta.

Le PP a une densité, mesurée selon la norme ASTM D1505, avantageusement comprise dans la gamme allant de 0,860 à 0,920, et un indice de fluidité, mesuré selon la norme ASTM D1238 (230°C/2,16 kg), compris dans la gamme allant de 0,3 à 10.

L'EPM a une densité, mesurée selon la norme ASTM D1505, avantageusement comprise dans la gamme allant de 0,860 à 0,910 et un taux de propylène compris dans la gamme allant de 25 à 60 % en poids. Le PP et l'EPM peuvent être indifféremment de catalyse métallocène ou Ziegler-Natta.

Le caoutchouc synthétique susceptible d'être utilisé dans les couches non centrales est avantageusement choisi parmi un copolymère styrène-éthylène-butylène-styrène (SEBS) ; un copolymère styrène-éthylène-propylène-styrène (SEPS) ; un copolymère styrène-isoprène-styrène (SIS) ; un SIS asymétrique, un dérivé vinylique, hydrogéné ou non, de SIS ; un copolymère styrène-isoprène-butadiène-styrène (SIBS) ; un copolymère styrène-isobutylène-styrène (SiBS) ; un copolymère éthylène-styrène (ES) ; et les mélanges de ces copolymères.

Les SEBS, les SEPS, les SIS, les SIBS et les SiBS ont avantageusement un taux de styrène inférieur ou égal à 50 % en poids, de préférence compris dans la gamme allant de 5 à 45 % en poids ; de manière également avantageuse, ces polymères ont un taux de diblocs SEB, SEP, SI, SIB ou SiB inférieur ou égal à 70 % en poids. Les ES ont avantageusement un taux de styrène compris dans la gamme allant de 5 à 85 % en poids, et de préférence un indice de fluidité, mesuré selon la norme ASTM 1238, compris dans la gamme allant de 0,1 à 40 dg/min.

Le copolymère d'éthylène et d'acétate de vinyle (EVA) susceptible d'être utilisé dans les couches non centrales a avantageusement un taux d'acétate de vinyle inférieur ou égal à 80 % en poids, et un indice de fluidité, mesuré selon la norme ASTM D1238, compris dans la gamme de 0,1 à 40 dg/min.

Chaque couche du support peut contenir un ou plusieurs additifs tels que des agents matants, notamment des agents antibloc ; des agents glissants ; des colorants ; des stabilisants UV ; des barrières UV ; des antioxydants ; des agents antivieillissement ; des additifs modifiant le niveau d'adhérence de la couche. Ces additifs, lorsqu'ils sont présents, représentent environ 0,1% à environ 25 % en poids du poids total de chaque couche. Des additifs particulièrement avantageux dans le cadre de la présente invention sont les agents matants, les agents antioxydants (primaires ou secondaires) et les agents antivieillissement.

Parmi les agents matants, on peut citer :
- les agents matants incompatibles avec les PE basse densité, tels que les polyéthylènes greffés acrylique ou les sels de polyéthylène ;
- les agents antibloc, tels que la silice et ses dérivés, le talc et ses dérivés, le mica et ses dérivés.

Parmi les agents antivieillissement, on peut citer les amines à encombrement stérique encore appelées HALS (de l'anglais « Hindered Amine Light Stabilizers »).

Il est possible d'utiliser plusieurs additifs du même type.

Le support utilisé dans le cadre de l'invention peut être préparé par extrusion de la ou des couches qui le constitue(nt), en particulier par co-extrusion coulée ou co-extrusion soufflage. Ces techniques sont bien connues de l'homme du métier, et sont décrites par exemple dans l'ouvrage « Encyclopedia of Chemical Technology » (Kirk-Othmer), 1996, volume 19, pages 290-316.

Le support du film adhésif sensible à la pression selon l'invention est enduit, sur l'une de ses faces, avec un vernis formant une couche « anti-adhésive ».

Le vernis utilisé dans le cadre de l'invention est à base de résine silicone modifiée par des fonctions époxy, et comprend :
- 100 parties en masse de résine époxy silicone ;
- 0-150 parties en masse d'un système modulateur d'adhérence ;
- >0-20 parties en masse, de préférence encore de 0,5 à 20 parties en masse, de préférence encore de 1 à 10 parties en masse, d'un photo-amorceur cationique ;
- 0-20 parties en masse d'un ou plusieurs additifs choisis parmi un agent anti-mousse et des charges améliorant le glissant, la résistance à l'abrasion, et/ou l'accrochage du vernis sur le film support.

A titre d'exemple de résine époxy silicone susceptible d'être utilisée dans le cadre de l'invention, on peut citer celles décrites dans la demande de brevet WO 2007/031539, qui comprennent
des polyorganosiloxanes constitués de motifs de formule (II) et éventuellement (III) et terminés par des motifs de formule (I) ou cycliques constitués de motifs de formule (II) représentées ci-dessous (issus du brevets WO/031539):

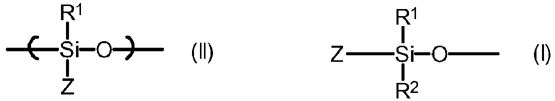

ZSiO_{3/2} (III)

dans lesquelles :
- les symboles R¹ et R² sont semblables ou différents et représentent :
   * un radical alkyle linéaire ou ramifié contenant 1 à 8 atomes de carbone, éventuellement substitué par au moins un halogène, de préférence le fluor,
   * un radical cycloalkyle contenant de 5 à 8 atomes de carbone éventuellement substitué,
   * un radical aryle contenant de 6 à 12 atomes de carbone éventuellement substitué, de préférence phényle ou dichlorophényle,
   * une partie aralkyle ayant une partie alkyle contenant de 5 à 14 atomes de carbone et une partie aryle contenant de 6 à 12 atomes de carbone, éventuellement substituée sur la partie aryle par des halogènes, des alkyles et/ou des alkoxyles contenant de 1 à 3 atomes de carbone,
- les symboles Z sont semblables ou différents et représentent :
   * un groupement R¹ et/ou R²,
   * un radical hydrogène,
   * et/ou un groupement organofonctionnel réticulable, de préférence un groupement époxy fonctionnel, acrylate fonctionnel, oxétane fonctionnel et/ou dioxolane fonctionnel ou alcényléther fonctionnel, relié au silicium du polyorganosiloxane par l'intermédiaire d'un radical divalent contenant de 2 à 20 atomes de carbone et pouvant contenir au moins un hétéroatome , de préférence l'oxygène,
   * avec l'un au moins des symboles Z représentant un groupement organique fonctionnel réticulable.

On peut également citer à titre d'exemple de résine époxy silicone susceptible d'être utilisée dans le cadre de l'invention celles décrites dans la demande de brevet WO 02/42388 (« silicone B »), ou bien encore celles commercialisées par la société Bluestar Silicones sous la dénomination SILCOLEASE^{®} UV 200 (gamme « polymers »).

Le système modulateur d'adhérence compris dans le vernis utilisé dans le cadre de l'invention va permettre un détachement contrôlé de l'adhésif (colle caoutchouc) lorsqu'on déroulera la bobine de film. Les modulateurs d'adhérence peuvent être des résines ou polymères linéaires silicones portant des fonctions vinyle, époxy, vinyléther, etc. Les groupements réactifs vont permettre aux résines du modulateur de se lier au «réseau» de silicone. Ces additifs sont décrits par exemple dans la demande de brevet FR-A-2 825 713.

A titre d'exemple de système modulateur d'adhérence susceptible d'être utilisé dans le cadre de l'invention, on peut citer les produits commercialisés par la société Bluestar Silicones sous la dénomination SILCOLEASE^{®} UV 200 (gamme « release control additives »).

La polymérisation et/ou réticulation par photoactivation est généralement initiée en présence d'un photoamorceur incorporé dans la matrice silicone. L'amorceur utilisé, généralement un photoamorceur cationique, libère un acide fort sous irradiation. Ce dernier catalyse la réaction de polymérisation cationique des groupements fonctionnels. Il est entendu que tout photoamorceur cationique actif sous U.V peut convenir selon l'invention. A titre d'exemple de photoamorceursusceptible d'être utilisé dans le cadre de l'invention, on peut citer les sels d'onium et en particulier ceux décrits dans les brevets US-A-4 026 705, US-A-4 032 673, US-A-4 069 056, US-A-4 136 102, US-A-4 173 476 et dans la demande de brevet EP-A-562 897 , les produits commercialisés par la société Evonik sous la dénomination TEGO^{®} PC, ou bien encore les produits commercialisés par la société Bluestar Silicones sous la dénomination SILCOLEASE^{®} UV 200^{®} (gamme « catalysts and additives »).

Dans un mode de réalisation de l'invention, le vernis comprend un ou plusieurs résines époxy silicone et un ou plusieurs systèmes modulateurs d'adhérence, dans les proportions respectives mentionnées ci-dessus.

Le vernis est enduit sur l'une des faces du support à raison de 0,4 à 2,5 g/m², en particulier de 0,5 à 2,5 g/m², ou encore de 1,5 à 2,5 g/m².

De préférence, le support est traité plasma ou Corona avant l'application du vernis.

Le vernis est appliqué sur la couche support en mettant en oeuvre des techniques bien connues d'enduction, comme par exemple et à titre indicatif les technologies d'enduction par gravure, directe ou indirecte (rouleau doseur poreux), par rideau, ou filière (« slot die »), par flexographie, ou encore par enducteur multi rouleaux (par exemple quatre, cinq ou six rouleaux). Puis le vernis est réticulé par photopolymérisation cationique sous rayonnement ionisant. Cette technique de photopolymérisation présente l'avantage, par rapport à la technique de polymérisation thermique ou de photopolymérisation radicalaire, de ne pas nécessiter de solvants (avantage économique et environnemental), ni de gaz inerte (avantage environnemental car moins de déchet et facilité d'utilisation).

Une fois le vernis réticulé, on applique sur l'autre face du support, via un enducteur positionné en série, la colle caoutchouc telle que définie ci-dessus.

Le caoutchouc naturel utilisé dans la colle caoutchouc peut provenir de n'importe quel pays producteur de caoutchouc naturel, tel que par exemple la Thaïlande, l'Indonésie, la Malaisie, l'Inde, le Vietnam, la Chine ou l'Afrique occidentale. Les grades TSR (Spécification technique du caoutchouc) pourront être par exemple les 5L, 5, 10, 20 et 50 ou les grades CV (« Viscosity Stabilized »), tels que les LV 45 , CV 50, LV 55 ou CV 55, LV 60 ou CV 60, LV 65 ou CV 65, ou CV 70, ayant subi, ou non, un ou plusieurs cycles de mastication.

Les composants caoutchouteux ou encore élastomériques sont choisis de manière à conduire à un mélange caoutchouteux possédant un indice Mooney de 20 à 80 selon la norme NF ISO 289-1, et de préférence de 30 à 60.

Le caoutchouc synthétique susceptible d'être utilisé dans la colle caoutchouc est avantageusement choisi parmi un polyisoprène synthétique (PI), un styrène butadiène (SBR), un copolymère d'isobutylène-isoprène (IIR, « isobutylene isoprene rubber » en anglais), un copolymère styrène-éthylène-butylène-styrène (SEBS) ; un copolymère styrène-éthylène-propylène-styrène (SEPS) ; un copolymère styrène-butadiène-styrène (SBS) ; un copolymère styrène-isoprène-styrène (SIS) ; un SIS asymétrique, un dérivé vinylique, hydrogéné ou non, de SIS ; un copolymère styrène-isoprène-butadiène-styrène (SIBS) ; un copolymère styrène-isobutylène-styrène (SiBS) ; un copolymère éthylène-styrène (ES) ; et les mélanges de ces copolymères avec ou sans caoutchouc naturel.

Lorsque la colle caoutchouc comprend un mélange de caoutchouc(s) naturel(s) et de caoutchouc(s) synthétique(s), le(s) caoutchouc(s) naturel(s) représente(nt) au moins 50% en masse, par exemple au moins 60% en masse, au moins 70% en masse, ou au moins 80% en masse, de la masse totale de la colle.

La résine tackifiante utilisée dans la colle caoutchouc est avantageusement une résine thermoplastique, de faible masse moléculaire, naturelle ou synthétique, ou non hydrogénée, hydrogénée totalement ou partiellement ou en mélange, de préférence en C5 ou C9 ou un mélange de C5/C9, une dioléfine cyclique (C5)₂, ou encore un dérivé de la colophane (colophane polymérisée, hydrogénée, estérifiée ou encore dismutée)

L'agent plastifiant susceptible d'être utilisé dans la colle caoutchouc est avantageusement une huile plastifiante ou une résine plastifiante de préférence à caractère faiblement polaire, apte à plastifier des élastomères, notamment thermoplastiques. A température ambiante (23°C), ces huiles, plus ou moins visqueuses, sont des liquides. Par exemple, l'huile plastifiante est choisie dans le groupe constitué par les huiles paraffiniques, naphténiques, ou aromatiques.

L'agent antivieillissement susceptible d'être utilisé dans la colle caoutchouc est tel que défini ci-dessus.

Avantageusement, le réticulant utilisé dans la colle caoutchouc de l'invention est un réticulant isocyanate, notamment un réticulant isocyanate aliphatique ou un réticulant isocyanate alicyclique. A titre d'exemple de réticulant isocyanate aliphatique, on peut citer un diisocyanate aliphatique, comme l'hexaméthylène diisocyanate ; un trimère d'un tel diisocyanate ; un triisocyanate aliphatique ; ainsi qu'un polymère issu de ces monomères homo- ou copolymérisés, ou issu de l'addition d'un polyol ou d'une polyamine avec un ou plusieurs de ces monomères, le polyol ou la polyamine pouvant être un polyéther, un polyester, un polycarbonate, ou un polyacrylate. A titre d'exemple de réticulant isocyanate alicyclique susceptible d'être utilisés dans le cadre de l'invention, on peut citer un diisocyanate alicyclique, comme le 3-isocyanatométhyl-3,5,5-triméthylcyclohexyl isocyanate (plus connu sous le nom d'isophorone diisocyanate ou IPDI) ou le diphénylméthane diisocyanate hydrogéné ; un trimère d'un tel diisocyanate ; un triisocyanate alicyclique ; ainsi qu'un polymère issu de ces monomères homo- ou copolymérisés, ou issu de l'addition d'un polyol ou d'une polyamine avec un ou plusieurs de ces monomères, le polyol ou la polyamine pouvant être un polyéther, un polyester, un polycarbonate, ou un polyacrylate.

D'autres familles de réticulants peuvent également être utilisées de manière avantageuse. A titre d'exemple, nous pouvons citer les polyaziridines, les polycarbodiimides ou encore les sels d'aluminium.

Dans un mode de réalisation de l'invention plusieurs couches de colle caoutchouc sont appliquées ; il va de soi que dans ce cas de figure au moins l'une des couches contient un réticulant.

Lorsque la colle caoutchouc ne contient pas de réticulant, le support est revêtu d'une couche de primaire d'accrochage, typiquement d'une épaisseur d'environ 1 µm, avant l'application de ladite colle.

D'autres additifs peuvent être utilisés tels que des retardateurs de flamme, des charges (talc, carbonate de calcium, etc.), des colorants, etc.

La colle caoutchouc utilisée dans le cadre de la présente invention possède un module élastique G' qui, mesuré à 1 Hz sur une plage de température allant de 0°C à 50°C, a des valeurs inférieures ou égales à 3.10⁵ Pa, de préférence inférieures ou égales à 10⁵ Pa, de préférence encore inférieures ou égales à 8.10⁴ Pa. La mesure du module élastique G' est effectuée selon la norme ISO 6721-1. Une telle mesure peut être effectuée à l'aide d'un rhéomètre à déformation imposée, comme l'appareil commercialisé sous la dénomination RDA II par la société RHEOMETRIC SCIENTIFIC (TA INSTRUMENT). L'expression « module élastique G' qui, mesuré à 1 Hz sur une plage de température allant de 0°C à 50°C, a des valeurs inférieures ou égales à 3.10⁵ Pa » signifie, comme cela est bien connu de l'homme du métier, que G' a les valeurs requises sur au moins une partie de la plage de température susmentionnée, par exemple à 0°C, 10°C, 20°C, 30°C, 40°C et/ou 50°C.

La colle est avantageusement enduite sur le support, en une ou plusieurs couches, à raison de environ 0,5 à environ 25 g/m², de préférence à raison de environ 0,5 à environ 20 g/m², de préférence encore à raison de environ 2 à environ 20 g/m².

De préférence, le support est traité plasma ou Corona avant l'application de la colle. L'application de la colle est réalisée en mettant en oeuvre les techniques d'enduction décrites ci-dessus pour le vernis, auxquelles peuvent être ajoutées des technologies spécifiques d'enduction des colles caoutchoucs solvantées comme les enductions « kiss-coat » ou « roll-over-roll ».

Le film adhésif sensible à la pression comprend des motifs imprimés sur le support du film (préalablement à l'enduction du vernis et de la colle). L'encre susceptible d'être utilisée pour l'impression peut être une encre à base solvant (essence, toluène, acétate d'éthyle etc.), eau, ou encore sans solvant réticulable UV ou par faisceau d'électrons.

Les encres sont principalement constituées de résines ou d'un mélange de résines qui peuvent être cellulosiques (par exemple nitrocellulosiques d'éthylcellulose, d'acétobutyrate ou d'acétoproprionate de cellulose) alkydes, polyester, polyuréthanes, maléiques, polyamides, vinyliques, acryliques, cétoniques, époxydiques, des polyesters insaturés, des polyols acrylés ou non, des résines époxydes, phénoxydes, des éthers de vinyle etc.

De préférence, le support est traité plasma ou Corona avant l'application de l'encre. L'encre est appliqué sur le support au moyen de techniques bien connues d'enduction. Nous pouvons citer à titre d'exemple, sans limitation, les technologies d'enduction par flexographie, sérigraphie, héliographie, offset, jet printing, etc.

Les quantités d'encre s'échelonnent le plus souvent entre environ 0,1 et environ 5 g/m². Elles sont le plus souvent comprises entre environ 0,5 et environ 1,5 g/m². Le film adhésif sensible à la pression ainsi obtenu a une épaisseur généralement comprise entre environ 20 µm et environ 150 µm, de préférence entre environ 20 µm et environ 110 µm. Le support représente généralement entre 60% et 95% de l'épaisseur totale du film.

Le film adhésif sensible à la pression selon l'invention possède, avant application sur une surface à protéger, une force de décollement, mesurée selon la norme AFERA 5001 (pelage à 180° et vitesse de pelage de 300 mm/min), dans la gamme de 40 à 400 cN/cm. Après application sur la surface à protéger, le film de protection possède une force de décollement (mesurée par dynamométrie selon un protocole adapté de la norme AFERA 5001, avec une vitesse de pelage de 300 mm/min) dans la gamme de 20 à 600 cN/cm, de préférence de 50 à 400 cN/cm.

Le film adhésif sensible à la pression selon l'invention est donc particulièrement adapté à la protection temporaire de surfaces, notamment la protection temporaire de surfaces métalliques nues ou peintes, de plaques plastiques, de stratifiés, de moquettes, de profilés plastiques, de surfaces plastiques vernies, de verre. Il est typiquement enroulé sur des bobines de largeur comprise entre 950mm et 2700mm, et de longueur comprise entre 250m et 2500m. Ledit film adhésif sensible à la pression présente notamment les avantages techniques suivants :
- il est écologique (pas d'utilisation de solvant lors de l'enduction du vernis sur le support) ;
- il se déroule à moindre bruit par rapport à des produits de même épaisseur et de même masse adhésive : le bruit au déroulement (mesuré entre 0 et 200m/min) est inférieur à 85 dB, ce qui répond au critère fixé dans la directive européenne n° 2003/10/CE relative à la protection des travailleurs exposés au bruit.

Il est connu que la réaction de polymérisation d'un vernis par photoréticulation cationique dure plus longtemps que la polymérisation par photoréticulation radicalaire. On pouvait donc s'attendre à ce que, du fait de la réticulation incomplète du vernis au moment de son association en série avec l'adhésif, ce dernier réagisse ou interpénètre avec la colle caoutchouc, elle-même réactive via son réticulant, lorsque le film est enroulé sur une bobine, et génère de la pollution ou un phénomène de blocage (« blocking ») lors du déroulement du film, rendant le film inutilisable pour la protection de surface. Or, contre toute attente, il s'avère que le fait de réticuler le vernis par photopolymérisation cationique ne pénalise pas la bonne cohésion du vernis et l'accroche du vernis sur l'endos du film, ne génère pas de pollution vis-à-vis de l'adhésif et ne génère pas de réaction entre les deux systèmes (colle et vernis), ce qui permet d'enduire en ligne le vernis réticulable par voie cationique et la colle réactive.

Selon un autre aspect, l'invention concerne l'utilisation du film adhésif sensible à la pression conforme à l'invention pour la protection temporaire de surfaces, notamment métalliques, qu'elles soient nues ou peintes.

Selon un autre aspect, l'invention concerne un procédé de protection temporaire d'une surface métallique, nue ou peinte, qui consiste à appliquer un film adhésif sensible à la pression tel que défini ci-dessus sur ladite surface.

L'invention concerne également, selon un autre aspect, un procédé de découpe ou de perçage par faisceau laser d'une tôle métallique qui comprend une étape de protection de ladite tôle métallique par un film adhésif sensible à la pression conforme à l'invention. Dans un mode de réalisation de cet aspect de l'invention, la tôle est une tôle en acier, notamment en acier inoxydable, ou une tôle en aluminium ou alliage d'aluminium ou en cuivre ou en laiton.

L'invention est illustrée par les exemples ci-après, donnés à titre purement indicatif.

### Exemple 1 : film adhésif composé d'un support tricouche enduit caoutchouc

On a préparé un film d'épaisseur 87 µm noir/blanc à l'aide d'un équipement de co-extrusion trois couches, par soufflage (blown). On a ainsi introduit :
- dans l'extrudeuse n°1, un mélange 90/10 en poids de polyéthylène radicalaire de densité 0,924 et d'indice de fluidité 0,7 et d'un mélange maître antibloquant ABPE 50N (Polytechs) ;
- dans l'extrudeuse n°2, un mélange 82/16/2 en poids de polyéthylène radicalaire de densité 0,924 et d'indice de fluidité 0,7, d'un agent colorant blanc (TiO₂), le CL8000 (A. Schulman), et d'anti-oxydant Polybatch UV1952 (A. Schulman) ; et
- dans l'extrudeuse n°3, un mélange 86/12/2 en poids de polyéthylène radicalaire de densité 0,924 et d'indice de fluidité 0,7, d'un agent colorant noir (Noir de carbone), le 1423HF1 (A. Schulman), et d'un mélange maître antibloquant ABPE 50N (Polytechs).

Un agent d'aide à l'extrusion, le mélange maître « processing aids » POLYBATCH^{®} NATURAL AMF 705 HF (A. Schulman), a été utilisé pour faciliter l'extrusion.

Le film extrudé ainsi obtenu présente une épaisseur de 87 µm, une brillance de 50 mesurée selon la norme ASTM2457. Les surfaces destinées à être en contact avec la couche adhésive et la couche vernis ont ensuite été traitées Corona.

Une composition adhésive a par ailleurs été préparée en mélangeant dans l'essence :
- 43% en poids de caoutchouc naturel (viscosité Mooney 45) ;
- 52% en poids de résine tackifiante C5 ;
- 1,5% en poids d'agent anti-oxydant ;
- 0,5% en poids d'agent anti-vieillissement ;
- 3% en poids de réticulant isocyanate ;
la composition ainsi obtenue ayant une Tg de 250°K, déterminée par Analyse Mécanique Dynamique (DMA, système ARES en mode plan-plan, selon un balayage en température de -193°K à 423°K avec une rampe en température de 5°K/min).

Une composition de vernis a par ailleurs été préparée en mélangeant :
- 50 parties en poids de poly 200 (Bluestar Silicones),
- 50 parties en poids d'agent Control Release RCA 251 (Bluestar Silicones),
- 3 parties en poids de photoamorceur cata 211 (Bluestar Silicones).

La composition de vernis a été enduite en ligne à 100m/min, sur l'une des faces du film support dans les conditions normales connues de l'homme du métier, et réticulée à l'aide d'une lampe à mercure de 200W/cm, de manière à obtenir un dépôt sec de 0,8 g/m², équivalent à une épaisseur de 0,8 microns. Puis la composition adhésive a été enduite, toujours en ligne, sur l'autre face du film support dans les conditions normales connues de l'homme du métier, de manière à obtenir un dépôt sec de 12 g/m², équivalent à une épaisseur de 12 microns.

### Exemple comparatif 1 : film adhésif composé d'un support tricouche enduit caoutchouc

On a répété le protocole de l'exemple 1 mais en utilisant comme vernis une composition de type polyvinyl octadécyl carbamate, de manière à obtenir un dépôt sec de 0,05g/m².

### Exemple 2 : film adhésif composé d'un support tricouche enduit caoutchouc

On a répété le protocole de l'exemple 1 mais en utilisant la composition de vernis suivante :
- 90 parties en poids de poly 200 (Bluestar Silicones),
- 10 parties en poids d'agent Control Release RCA 251 (Bluestar Silicones),
- 3 parties en poids de poids de photoamorceur cata 211 (Bluestar Silicones).

Comme dans l'exemple 1, la composition de vernis a été enduite en ligne à 100m/min, sur l'une des faces du film support dans les conditions normales connues de l'homme du métier, et réticulée à l'aide d'une lampe à mercure de 200W/cm, de manière à obtenir un dépôt sec de 0,8 g/m², équivalent à une épaisseur de 0,8 microns.

Les propriétés des films des exemples 1 et 2 et de l'exemple comparatif 1 sont rapportées dans le tableau 1.

**Tableau 1**

| | Exemple 1 | Exemple 2 | Ex. comp. 1 |
|---|---|---|---|
| Dépôt (g/m²) | 0,8 | 0,8 | 0,05 |
| Bruit (dB) à 100m/min sur 1000 mm de laize | 81,5 | 83,5 | 95,5 |
| Force de décollement sur endos (cN/cm) | 114 | 121 | 109 |
| PAL/A 5001 (cN/cm) | 97 | 91 | 84 |
| Force de décollement sur Inox 2B (cN/cm) | 184 | 182 | 183 |

Les films adhésifs sensibles à la pression selon l'invention possèdent une force de décollement initiale sur leur endos comparable au témoin (mesure par dynamomètre de type Instron à 300 mm/min et 180°, protocole adapté de la norme AFERA 5001 : application du film testé sur un échantillon d'endos du film, l'échantillon est ensuite laissé sous atmosphère contrôlée pendant 1h avant la mesure). Les résultats obtenus montrent qu'il n'y a pas eu de pollution de la colle par le vernis.

Les films adhésifs sensibles à la pression selon l'invention possèdent également une force de décollement initiale sur inox 2B comparable au témoin (mesure par dynamomètre de type Instron à 300 mm/min et 180°, protocole adapté de la norme AFERA 5001 : application du film testé sur une plaque en inox à l'aide d'une calandre, la plaque est ensuite laissée sous atmosphère contrôlée pendant 1h avant la mesure). Les films adhésifs sensibles à la pression selon l'invention possèdent par ailleurs une force de décollement PAL/A (mesure par dynamomètre de type Instron à 300 mm/min et 180°, selon le protocole de la norme AFERA 5001) qui est comparable au témoin. Les résultats obtenus confirment qu'il n'y a pas eu de pollution de la colle par le vernis.

Le bruit, lors du déroulement des bobines, a été mesuré à une vitesse de déroulement de 100 m/min (bobine de 1000 mm de laize) à l'aide d'un sonomètre CIRRUS Optimus CR 162C. On constate une nette réduction du bruit pour les films conformes à l'invention : moins de 85 dB pour le film adhésif des exemples 1 et 2 contre plus de 95 dB pour la bobine témoin (exemple comparatif 1).

### Exemple 3 : film adhésif composé d'un support tricouche enduit caoutchouc

On a préparé un film d'épaisseur 87 µm noir/blanc à l'aide d'un équipement de co-extrusion trois couches, par soufflage (blown). On a ainsi introduit :
- dans l'extrudeuse n°1, un mélange 98/2 en poids de polyéthylène radicalaire de densité 0,924 et d'indice de fluidité 0,7 et d'un mélange maître antibloquant ABPE 50N (Polytechs) ;
- dans l'extrudeuse n°2, un mélange 82/16/2 en poids de polyéthylène radicalaire de densité 0,924 et d'indice de fluidité 0,7, d'un agent colorant blanc (TiO₂), le CL8000 (A. Schulman), et d'anti-oxydant Polybatch UV1952 (A. Schulman) ; et
- dans l'extrudeuse n°3, un mélange 86/12/2 en poids de polyéthylène radicalaire de densité 0,924 et d'indice de fluidité 0,7, d'un agent colorant noir (Noir de carbone), le 1423HF1 (A. Schulman), et d'un mélange maître antibloquant ABPE 50N (Polytechs).

Un agent d'aide à l'extrusion, le mélange maître « processing aids » POLYBATCH^{®} NATURAL AMF 705 HF (A. Schulman), a été utilisé pour faciliter l'extrusion.

Le film extrudé ainsi obtenu présente une épaisseur de 87 µm et une brillance de 67 mesurée selon la norme ASTM2457. Les surfaces destinées à être en contact avec la couche adhésive et la couche vernis ont ensuite été traitées Corona.

On a répété le protocole de l'exemple 2 mais en enduisant, toujours en ligne, la face externe du film d'une encre nitrocellulosique bleue à 0,8g/m² en flexographie, préalablement à l'application du vernis qui a ensuite été réticulé sous UV de manière à obtenir un dépôt sec de 2,5 g/m², équivalent à une épaisseur de 2,5 microns.

### Exemple comparatif 3 : film adhésif composé d'un support tricouche enduit caoutchouc

On a répété le protocole de l'exemple 3 mais en utilisant comme vernis une composition de type polyvinyl octadécyl carbamate, de manière à obtenir un dépôt sec de 0,05g/m², équivalent à une épaisseur de 0,05 micron.

Les propriétés des films de l'exemple 3 et de l'exemple comparatif 3 sont rapportées dans le tableau 2.

**Tableau 2**

| | Exemple 3 | Ex. comp. 3 |
|---|---|---|
| Dépôt (g/m²) | 2,5 | 0,05 |
| Bruit (dB) à 100m/min sur 200 mm de laize | 77,5 | 113 |
| Force de déroulement à 100 m/min (cN/cm) | 16 | 100 |
| PAL/A 5001 (cN/cm) | 149 | 138 |
| Force de décollement sur Inox 2B (cN/cm) | 190 | 200 |

Le film adhésif sensible à la pression de l'exemple 3 possède une force de déroulement initiale à 100 m/min nettement améliorée par rapport au témoin (mesure à 100 m/min à l'aide de l'appareillage Lefebure "Force de déroulement" avec capteur FN 3148 N° 1294 et indicateur type électronique M210 N° 833 inspiré de la norme européenne NF EN 12026).

Le film adhésif sensible à la pression de l'exemple 3 possède une force de décollement initiale sur Inox 2B et un PAL/A 5001 comparables au témoin (mesure comme indiqué à l'exemple 2). Les résultats obtenus montrent qu'il n'y a pas eu de pollution de la colle par le vernis.

Le bruit, lors du déroulement des bobines, a été mesuré à une vitesse de déroulement de 100 m/min (bobine de 200mm de laize) à l'aide d'un sonomètre CIRRUS Optimus CR 162C. On constate une nette réduction du bruit pour le film conforme à l'invention : moins de 80 dB pour le film adhésif de l'exemple 3 contre plus de 110 dB pour la bobine témoin (exemple comparatif 3).

### Exemple 4 : film adhésif composé d'un support tricouche enduit caoutchouc

On a préparé un film d'épaisseur 54 µm incolore à l'aide d'un équipement de co-extrusion trois couches, par soufflage (blown). On a ainsi introduit :
- dans l'extrudeuse n°1, un mélange 98/2 en poids de polyéthylène radicalaire de densité 0,924 et d'indice de fluidité 0,7 et d'un mélange maître antibloquant ABPE 50N (Polytechs) ;
- dans l'extrudeuse n°2, un mélange 98/2 en poids de polyéthylène radicalaire de densité 0,924 et d'indice de fluidité 0,7, et d'anti-oxydant Polybatch UV1952 (A. Schulman) ; et
- dans l'extrudeuse n°3, un mélange 98/2 en poids de polyéthylène radicalaire de densité 0,924 et d'indice de fluidité 0,7, et d'un mélange maître antibloquant ABPE 50N (Polytechs).

Un agent d'aide à l'extrusion, le mélange maître « processing aids » POLYBATCH^{®} NATURAL AMF 705 HF (A. Schulman), a été utilisé pour faciliter l'extrusion.

Le film extrudé ainsi obtenu présente une épaisseur de 54 µm et une brillance de 75 telle que mesurée selon la norme ASTM2457. Les surfaces destinées à être en contact avec la couche adhésive et la couche vernis ont ensuite été traitées Corona.

Une composition adhésive a par ailleurs été préparée en mélangeant dans l'essence :
- 48% en poids de caoutchouc naturel (viscosité Mooney 45),
- 33% en poids de résine tackifiante C5,
- 12% en poids d'une huile paraffinique comme agent plastifiant,
- 1,5% en poids d'agent anti-oxydant,
- 1,5% en poids d'agent anti-vieillissement,
- 4% en poids de réticulant isocyanate,
la composition ainsi obtenue ayant une température de transition vitreuse égale à 251°K, déterminée par DMA (système ARES en mode plan-plan, selon un balayage en température de -193°K à 423°K avec une rampe en température de 5°K/min).

Une composition de vernis a par ailleurs été préparée en mélangeant :
- 50 parties en poids de poly 205 (Bluestar Silicones),
- 50 parties en poids d'agent Control Release RCA 251 (Bluestar Silicones).

La composition de vernis a été enduite en ligne à 100m/min, sur l'une des faces du film support dans les conditions normales connues de l'homme du métier, réticulée à l'aide d'une lampe à mercure de 200W/cm, de manière à obtenir un dépôt sec de 1 g/m², équivalent à une épaisseur de 1 micron. Puis, la composition adhésive a été enduite, toujours en ligne, sur l'autre face du film support dans les conditions normales connues de l'homme du métier, de manière à obtenir un dépôt sec de 8 g/m², équivalent à une épaisseur de 8 microns.

### Exemple Comparatif 4 : film adhésif composé d'un support tricouche enduit caoutchouc

On a répété le protocole de l'exemple 4 mais en utilisant comme vernis une composition de type polyvinyl octadécyl, de manière à obtenir un dépôt sec de 0,05g/m², équivalent à une épaisseur de 0,05 micron.

Les propriétés des films de l'exemple 4 et de l'exemple comparatif 4 sont rapportées dans le tableau 3.

**Tableau 3**

| | Exemple 4 | Ex. comp. 4 |
|---|---|---|
| Dépôt (g/m²) | 1 | 0,05 |
| Bruit (dB) à 100m/min sur 200 mm de laize | 80 | 96 |
| PAL/A 5001 (cN/cm) | 130 | 115 |

Le film adhésif sensible à la pression de l'exemple 4 possède une force de décollement initiale PAL/A 5001 comparable au témoin (mesure comme indiqué à l'exemple 2). Le bruit, lors du déroulement des bobines, a été mesuré à une vitesse de déroulement de 100 m/min (bobine de 200 mm de laize) à l'aide d'un sonomètre CIRRUS Optimus CR 162C. On constate une nette réduction du bruit pour le film conforme à l'invention : 80 dB pour le film adhésif de l'exemple 4 contre 96 dB pour la bobine témoin (exemple comparatif 4).

### Exemple 5 : film adhésif composé d'un support tricouche enduit caoutchouc

On a préparé un film bleu d'épaisseur 67 µm à l'aide d'un équipement de co-extrusion trois couches, par soufflage (blown). On a ainsi introduit :
- dans l'extrudeuse n°1, un mélange 98/2 en poids de polyéthylène radicalaire de densité 0,924 et d'indice de fluidité 0,7 et d'un mélange maître antibloquant ABPE 50N (Polytechs) ;
- dans l'extrudeuse n°2, un mélange 93/5/2 en poids de polyéthylène radicalaire de densité 0,924 et d'indice de fluidité 0,7, d'un agent colorant bleu, le Polybatch blue 4025 (A. Schulman) et d'anti-oxydant Polybatch UV1952 (A. Schulman) ; et
- dans l'extrudeuse n°3, un mélange 98/2 en poids de polyéthylène radicalaire de densité 0,924 et d'indice de fluidité 0,7, et d'un mélange maître antibloquant ABPE 50N (Polytechs).

Un agent d'aide à l'extrusion, le mélange maître « processing aids » POLYBATCH^{®} NATURAL AMF 705 HF (A. Schulman), a été utilisé pour faciliter l'extrusion.

Le film extrudé ainsi obtenu présente une épaisseur de 67 µm et une brillance de 70 telle que mesurée selon la norme ASTM2457. Les surfaces destinées à être en contact avec la couche adhésive et la couche vernis ont ensuite été traitées Corona.

Une composition adhésive a par ailleurs été préparée en mélangeant dans l'essence :
- 48% en poids de caoutchouc naturel (viscosité Mooney 45),
- 33% en poids de résine tackifiante C5,
- 12% en poids d'une huile paraffinique comme agent plastifiant,
- 1,5% en poids d'agent anti-oxydant,
- 1,5% en poids d'agent anti-vieillissement,
- 4% en poids de réticulant isocyanate,
la composition ainsi obtenue ayant une température de transition vitreuse égale à 243°K, déterminée par DMA (système ARES en mode plan-plan, selon un balayage en température de -193°K à 423°K avec une rampe en température de 5°K/min).

Une composition de vernis a par ailleurs été préparée en mélangeant :
- 100 parties en poids de poly 204 (Bluestar Silicones),
- 1 partie en poids de photoamorceur cata 243 (Bluestar Silicones).

La composition de vernis a été enduite en ligne avant l'adhésif à 100m/min, sur le film support dans les conditions normales connues de l'homme du métier, et réticulée à l'aide d'une lampe à mercure de 200W/cm, de manière à obtenir un dépôt sec de 0,6 g/m², équivalent à une épaisseur de 0,6 microns.

La composition adhésive a été enduite sur le film support dans les conditions normales connues de l'homme du métier, de manière à obtenir un dépôt sec de 8 g/m², équivalent à une épaisseur de 8 microns.

### Exemple Comparatif 5 : film adhésif composé d'un support tricouche enduit caoutchouc

On a répété le protocole de l'exemple 5 mais en utilisant comme vernis une composition de type polyvinyl octadécyl carbamate, de manière à obtenir un dépôt sec de 0,05g/m², correspondant à une épaisseur de 0,05 micron.

Les propriétés des films de l'exemple 5 et de l'exemple comparatif 5 sont rapportées dans le tableau 4.

**Tableau 4**

| | Exemple 5 | Ex. comp. 5 |
|---|---|---|
| Dépôt (g/m²) | 0,6 | 0,05 |
| Bruit (dB) à 100m/min sur 200 mm de laize | 77 | 95 |
| PAL/A 5001 (cN/cm) | 130 cN/cm | 115 cN/cm |

Le film adhésif sensible à la pression possède une force de décollement initiale PAL/A 5001 comparable au témoin (mesure comme indiqué à l'exemple 2). Le bruit, lors du déroulement des bobines, a été mesuré à une vitesse de déroulement de 100 m/min (bobine de 200 mm de laize) à l'aide d'un sonomètre CIRRUS Optimus CR 162C. On constate une nette réduction du bruit pour les films conformes à l'invention : 77 dB pour le film adhésif de l'exemple 5 contre 95 dB pour la bobine témoin (exemple comparatif 5).

### Exemple 6 : film adhésif composé d'un support tricouche enduit caoutchouc

On a préparé un film d'épaisseur 87 µm noir/blanc à l'aide d'un équipement de co-extrusion trois couches, par soufflage (blown). On a ainsi introduit :
- dans l'extrudeuse n°1, un mélange 90/10 en poids de polyéthylène radicalaire de densité 0,924 et d'indice de fluidité 0,7 et d'un mélange maître antibloquant ABPE 50N (Polytechs) ;
- dans l'extrudeuse n°2, un mélange 82/16/2 en poids de polyéthylène radicalaire de densité 0,924 et d'indice de fluidité 0,7, d'un agent colorant blanc (TiO₂), le CL8000 (A. Schulman), et d'anti-oxydant Polybatch UV1952 (A. Schulman) ; et
- dans l'extrudeuse n°3, un mélange 86/12/2 en poids de polyéthylène radicalaire de densité 0,924 et d'indice de fluidité 0,7, d'un agent colorant noir (Noir de carbone), le 1423HF1 (A. Schulman), et d'un mélange maître antibloquant ABPE 50N (Polytechs).

Un agent d'aide à l'extrusion, le mélange maître « processing aids » POLYBATCH^{®} NATURAL AMF 705 HF (A. Schulman), a été utilisé pour faciliter l'extrusion.

Le film extrudé ainsi obtenu présente une épaisseur de 87 µm, une brillance de 50 mesurée selon la norme ASTM2457. Les surfaces destinées à être en contact avec la couche adhésive et la couche vernis ont ensuite été traitées Corona.

Une composition adhésive a par ailleurs été préparée en mélangeant dans l'essence :
- 24% en poids de caoutchouc naturel (viscosité Mooney 45),
- 24% en poids de caoutchouc synthétique SIBS,
- 24% en poids de résine tackifiante C5,
- 21% en poids d'une huile paraffinique comme agent plastifiant,
- 1,5% en poids d'agent anti-oxydant,
- 1,5% en poids d'agent anti-vieillissement,
- 4% en poids de réticulant isocyanate.

La composition ainsi obtenue a une température de transition vitreuse égale à 240°K, déterminée par DMA (système ARES en mode plan-plan, selon un balayage en température de -193°K à 473°K avec une rampe en température de 5°K/min) et un module élastique G', mesuré à 20°C, égal à 7,5.10⁴ Pa.

Une composition de vernis a par ailleurs été préparée en mélangeant :
- 40 parties en poids de poly 204 (Bluestar Silicones),
- 40 parties en poids de poly 201 (Bluestar Silicones),
- 10 parties en poids d'agent Control Release RCA 251 (Bluestar Silicones),
- 10 parties en poids d'agent Control Release RCA 200 (Bluestar Silicones),
- 3 parties en poids de poids de photoamorceur cata 211 (Bluestar Silicones).

La composition de vernis a été enduite en ligne à 100m/min, sur l'une des faces du film support dans les conditions normales connues de l'homme du métier, réticulée à l'aide d'une lampe à mercure de 200W/cm, de manière à obtenir un dépôt sec de 1 g/m², équivalent à une épaisseur de 1 micron. Puis, la composition adhésive a été enduite, toujours en ligne, sur l'autre face du film support dans les conditions normales connues de l'homme du métier, de manière à obtenir un dépôt sec de 12 g/m², équivalent à une épaisseur de 12 microns.

### Exemple Comparatif 6 : film adhésif composé d'un support tricouche enduit caoutchouc

On a répété le protocole de l'exemple 6 mais en utilisant comme vernis une composition de type polyvinyl octadécyl, de manière à obtenir un dépôt sec de 0,05g/m², équivalent à une épaisseur de 0,05 micron.

Les propriétés des films de l'exemple 6 et de l'exemple comparatif 6 sont rapportées dans le tableau 5.

**Tableau 5**

| | Exemple 6 | Ex. comp. 6 |
|---|---|---|
| Dépôt (g/m²) | 1 | 0,05 |
| Bruit (dB) à 100m/min sur 2500 mm de laize | 81 | 100 |
| PAL/A 5001 (cN/cm) | 100 cN/cm | 100 cN/cm |

Le film adhésif sensible à la pression de l'exemple 6 possède une force de décollement initiale PAL/A 5001 comparable au témoin (mesure comme indiqué à l'exemple 2). Le bruit, lors du déroulement des bobines, a été mesuré à une vitesse de déroulement de 100 m/min (bobine de 2500 mm de laize et 1000m de long) à l'aide d'un sonomètre CIRRUS Optimus CR 162C. On constate une nette réduction du bruit pour le film conforme à l'invention : 81 dB pour le film adhésif de l'exemple 6 contre 100 dB pour la bobine témoin (exemple comparatif 6), le bruit ambiant dans l'atelier étant de 72dB avant le déroulement des bobines.

## Revendications

1. Film adhésif sensible à la pression pour la protection temporaire de surfaces métalliques qui comprend :
- un support comprenant au moins une couche de polyoléfine,
- une colle caoutchouc enduite sur l'une des faces du support,
- un vernis à base de silicone modifié époxy enduit sur l'autre face dudit support, en une quantité allant de 0,4 à 2,5 g/cm²,
ladite colle caoutchouc ayant une température de transition vitreuse (Tg), déterminée par Analyse Mécanique Dynamique (système ARES en mode plan-plan, selon un balayage en température de -193°K à 423°K avec une rampe en température de 5°K/min), supérieure à 230°K et étant obtenue par mélange d'environ 5% à 40% en masse (extrait sec) d'une formulation contenant :
• 30 à 80% en masse, de préférence de 35 à 75% en masse, d'un caoutchouc naturel ou d'un mélange de caoutchouc(s) naturel(s) et de caoutchouc(s) synthétique(s) ;
• 5 à 60% en masse, de préférence 20 à 60% en masse, de préférence encore 30 à 60% en masse, d'une ou plusieurs résine(s) tackifiante(s) ;
• 0 à 40% en masse, de préférence 0 à 20% en masse, d'un agent plastifiant ;
• >0 à 6% en masse, de préférence >0 à 4% en masse, d'un réticulant ;
• 0 à 4% en masse, de préférence 0 à 2% en masse, d'un ou plusieurs agent(s) anti- vieillissement ;
dans un solvant hydrocarboné, étant entendu que la somme des différents constituants de la formulation est égale à 100% en masse ;
ledit vernis comprenant :
• 100 parties en masse de résine époxy silicone ;
• 0-150 parties en masse d'un système modulateur d'adhérence ;
• >0-20 parties en masse d'un photo-amorceur cationique ;
• 0-20 parties en masse d'un ou plusieurs additifs choisis parmi un agent anti-mousse et des charges améliorant le glissant, la résistance à l'abrasion, et/ou l'accrochage du vernis sur le film support ;
ledit film adhésif sensible à la pression ayant une largeur comprise entre 950 mm et 2700 mm ;
ledit film adhésif sensible à la pression comprenant des motifs imprimés sur le support.

2. Film adhésif selon la revendication 1, dans lequel la quantité de vernis déposée sur l'autre face dudit support est de 0,5 à 2,5 g/m².

3. Film adhésif selon la revendication 1, dans lequel la quantité de vernis déposée sur l'autre face dudit support est de 1,5 à 2,5 g/m².

4. Film adhésif sensible à la pression selon l'une des revendications 1 à 3, dans lequel la polyoléfine constituant au moins une couche du support est choisie parmi un polyéthylène basse densité radicalaire, un polyéthylène linéaire, un polypropylène, un copolymère d'éthylène et de propylène, ou un mélange de ces composés.

5. Film adhésif sensible à la pression selon l'une des revendications 1 à 4, dans lequel ladite au moins une couche de polyoléfine comprend un ou plusieurs additifs choisis parmi les agents matants, en particulier les agents antibloc ; les agents glissants ; les colorants ; les stabilisants UV ; les barrières UV ; les antioxydants ; les agents antivieillissement.

6. Film adhésif sensible à la pression selon l'une des revendications 1 à 5, dans lequel la colle caoutchouc possède un module élastique G' qui, mesuré à 1 Hz sur une plage de température allant de 0°C à 50°C selon la norme ISO 6721-1, a des valeurs inférieures ou égales à 3.10⁵ Pa.

7. Film adhésif sensible à la pression selon l'une des revendications 1 à 6, dans lequel la colle caoutchouc est enduite sur le support à raison de 0,5 à 25 g/m², de préférence à raison de 0,5 à 20 g/m², de préférence encore à raison de 2 à 20 g/m².

8. Utilisation d'un film adhésif sensible à la pression tel que défini dans l'une des revendications 1 à 7 pour la protection temporaire de surfaces métalliques.

9. Procédé de protection d'une surface métallique qui consiste à appliquer un film adhésif sensible à la pression tel que défini dans l'une des revendications 1 à 7 sur ladite surface.

10. Procédé de découpe ou de perçage par faisceau laser d'une tôle métallique qui comprend une étape de protection de ladite tôle métallique par un film adhésif sensible à la pression selon l'une des revendications 1 à 7.

11. Procédé selon la revendication 10, dans lequel la tôle est une tôle en acier, notamment en acier inoxydable, ou une tôle en aluminium ou alliage d'aluminium.

## Patentansprüche

1. Druckempfindliche Klebefolie zum temporären Schutz von Metalloberflächen, die umfasst:
- einen Träger, der mindestens eine Polyolefinschicht umfasst,
- einen Kautschukklebstoff, der auf eine Seite des Trägers aufgetragen ist, und
- einen epoxymodifizierten Silikonlack, der auf die andere Seite des Trägers aufgetragen ist, in einer Menge von 0,4 bis 2,5 g/cm²,
wobei der Kautschukklebstoff eine Glasübergangstemperatur (Tg), bestimmt durch Dynamische Mechanische Analyse (ARES-System im Plan-Ebene-Modus, gemäß einer Temperaturabtastung von -193°K bis 423°K mit einer Temperaturrampe von 5°K/min), von über 230°K aufweist und durch Mischen von etwa 5 bis 40 Gew.-% (Trockenmasse) einer Formulierung erhalten wird, die enthält:
- 30 bis 80 Gew.-%, vorzugsweise 35 bis 75 Gew.-%, eines Naturkautschuks oder einer Mischung aus Naturkautschuk(en) und synthetischem(n) Kautschuk(en);
- 5 bis 60 Gew.-%, vorzugsweise 20 bis 60 Gew.-%, besonders bevorzugt 30 bis 60 Gew.-%, eines oder mehrerer klebrigmachender Harze;
- 0 bis 40 Gew.-%, vorzugsweise 0 bis 20 Gew.-%, eines Weichmachers;
- >0 bis 6 Gew.-%, vorzugsweise >0 bis 4 Gew.-%, eines Vernetzers;
- 0 bis 4 Gew.-%, vorzugsweise 0 bis 2 Gew.-%, eines oder mehrerer Alterungsschutzmittel;
in einem Kohlenwasserstofflösungsmittel, mit der Maßgabe, dass die Summe der verschiedenen Bestandteile der Formulierung gleich 100 Gew.-% ist;
wobei der Lack umfasst:
- 100 Gewichtsteile Silikonepoxyharz;
- 0-150 Gewichtsteile eines Haftungsmodulatorsystems;
- >0-20 Gewichtsteile eines kationischen Photoinitiators;
- 0-20 Gewichtsteile eines oder mehrerer Additive, ausgewählt aus einem Antischaummittel und Füllstoffen, die die Gleitfähigkeit, die Abriebfestigkeit und/oder die Haftung des Lacks auf dem Trägerfilm verbessern;
wobei die druckempfindliche Klebefolie eine Breite zwischen 950 mm und 2700 mm aufweist;
wobei die druckempfindliche Klebefolie Muster umfasst, die auf den Träger gedruckt sind.

2. Klebefolie nach Anspruch 1, wobei die Menge an Lack, die auf die andere Seite des des Trägers aufgetragen ist, 0,5 bis 2,5 g/m² beträgt.

3. Klebefolie nach Anspruch 1, wobei die Menge an Lack, die auf die andere Seite des des Trägers aufgetragen ist, 1,5 bis 2,5 g/m2 beträgt.

4. Druckempfindliche Klebefolie nach einem der Ansprüche 1 bis 3, wobei das Polyolefin, das mindestens eine Schicht des Trägers bildet, ausgewählt ist aus radikalisches Polyethylen mit niedriger Dichte, lineares Polyethylen, Polypropylen, einem Ethylen-Propylen-Copolymer oder einer Mischung dieser Verbindungen.

5. Druckempfindliche Klebefolie nach einem der Ansprüche 1 bis 4, wobei die mindestens eine Polyolefinschicht ein oder mehrere Additive umfasst, die ausgewählt sind aus Mattierungsmitteln, insbesondere Antiblockmitteln; Gleitmitteln; Farbstoffen; UV-Stabilisatoren; UV-Barrieren; Antioxidantien; Alterungsschutzmitteln.

6. Druckempfindliche Klebefolie nach einem der Ansprüche 1 bis 5, wobei der Kautschukklebstoff einen Elastizitätsmodul G' aufweist, der, gemessen bei 1 Hz über einen Temperaturbereich von 0°C bis 50°C gemäß Iso-Standard 6721-1, Werte von 3.10⁵ Pa oder weniger aufweist.

7. Druckempfindliche Klebefolie nach einem der Ansprüche 1 bis 6, wobei der Kautschukklebstoff auf den Träger in einer Menge von 0,5 bis 25 g/m², vorzugsweise in einer Menge von 0,5 bis 20 g/m², weiter vorzugsweise in einer Menge von 2 bis 20 g/m² aufgetragen wird.

8. Verwendung einer druckempfindlichen Klebefolie, wie in einem der Ansprüche 1 bis 7 definiert ist, zum temporären Schutz von Metalloberflächen.

9. Verfahren zum Schutz einer Metalloberfläche, bei dem eine druckempfindliche Klebefolie, wie in einem der Ansprüche 1 bis 7 definiert ist, auf die Oberfläche aufgetragen wird.

10. Verfahren zum Schneiden oder Bohren eines Metallblechs mit einem Laserstrahl, das einen Schritt zum Schützen des Metallblechs mit einer druckempfindlichen Klebefolie nach einem der Ansprüche 1 bis 7 umfasst.

11. Verfahren nach Anspruch 10, wobei das Blech ein Stahlblech, insbesondere ein Edelstahlblech, oder ein Blech aus Aluminium oder aus einer Aluminiumlegierung ist.

## Claims

1. A pressure-sensitive adhesive film for temporary protection of metal surfaces which comprises:
- a backing comprising at least one layer of polyolefin,
- a rubber adhesive coated on one of the sides of the backing,
- a varnish based on epoxy-modified silicone coated on the other side of said backing, at a rate from 0.4 to 2.5 g/m²,
said rubber adhesive having a glass transition temperature (Tg), determined by dynamic mechanical analysis (ARES system in plate-plate mode, with a temperature sweep from -193°K to 423°K with a temperature ramp of 5°K/min), greater than 230°K and being obtained by mixing about 5 to 40 wt% (dry extract) of a formulation containing:
• 30 to 80 wt%, preferably from 35 to 75 wt%, of a natural rubber or of a mixture of natural rubber(s) and synthetic rubber(s);
• 5 to 60 wt%, preferably 20 to 60 wt%, more preferably 30 to 60 wt%, of one or more tackifying resin(s);
• 0 to 40 wt%, preferably 0 to 20 wt%, of a plasticizer;
• >0 to 6 wt%, preferably >0 to 4 wt%, of a crosslinking agent;
• 0 to 4 wt%, preferably 0 to 2 wt%, of one or more antiaging agent(s);
in a hydrocarbon-containing solvent, it being understood that the sum of the various constituents of the formulation is equal to 100 wt%;
said varnish comprising:
• 100 parts by weight of silicone epoxy resin;
• 0-150 parts by weight of an adherence modulating system;
• >0-20 parts by weight of a cationic photo-initiator;
• 0-20 parts by weight of one or more additives selected from an antifoaming agent and fillers that improve sliding, abrasion resistance, and/or bonding of the varnish on the backing film;
said pressure-sensitive adhesive film having a width between 950 mm and 2700 mm;
said pressure-sensitive adhesive film comprising patterns printed on the backing.

2. The pressure-sensitive adhesive film of claim 1, wherein the varnish is coated on the other side of said backing at a rate of 0.5 to 2.5 g/m².

3. The pressure-sensitive adhesive film of claim 1, wherein the varnish is coated on the other side of said backing at a rate more at a rate of 0.5 to 1.5 g/m².

4. The pressure-sensitive adhesive film of one of claims 1 to 3, wherein the polyolefin constituting at least one layer of the backing is selected from a radical low-density polyethylene, a linear polyethylene, a polypropylene, a copolymer of ethylene and propylene, and a mixture of these compounds.

5. The pressure-sensitive adhesive film of one of claims 1 to 4, wherein said at least one layer of polyolefin comprises one or more additives selected from matting agents, in particular anti-blocking agents; glidants; colorants; UV stabilizers; UV barriers; antioxidants; antiaging agents.

6. The pressure-sensitive adhesive film of one one of claims 1 to 5, in which the rubber adhesive has an elastic modulus G' which, measured at 1 Hz over a temperature range from 0°C to 50°C according to standard ISO 6721-1, has values less than or equal to 3.10⁵ Pa.

7. The pressure-sensitive adhesive film of one of claims 1 to 6, in which the rubber adhesive is coated on the backing at a rate from 0.5 to 25 g/m², preferably at a rate from 0.5 to 20 g/m², more preferably at a rate from 2 to 20 g/m².

8. Use of a pressure-sensitive adhesive film as defined in one of claims 1 to 7 for temporary protection of metal surfaces.

9. A method for protecting a metal surface which consists in applying a pressure-sensitive adhesive film as defined in one of claims 1 to 7 onto said surface.

10. A method for laser beam cutting or piercing of a metal sheet which comprises a step of protecting said metal sheet with a pressure-sensitive adhesive film of one of claims 1 to 7.

11. The method of claim 10, in which the sheet is a sheet of steel, notably of stainless steel, or a sheet of aluminum or aluminum alloy.
